# FASCICULE DE BREVET EUROPEEN

(11) **EP 3 951 149 B1**
(45) Date de publication et mention de la délivrance du brevet: **07.06.2023**
(21) Numéro de dépôt: 21183834.7
(22) Date de dépôt: 05.07.2021
(51) Int. Cl.: F02C 6/08, B64D 41/00, B64D 13/06, F01D 15/10, F02C 6/10, F02C 7/32

(54) **PROCÉDÉ DE GESTION DU PRÉLÈVEMENT D'UNE PUISSANCE PRODUITE PAR UN GROUPE AUXILIAIRE DE PUISSANCE D'UN AÉRONEF ET AÉRONEF ÉQUIPÉ DUDIT DISPOSITIF DE GESTION DE PRÉLÈVEMENT DE PUISSANCE**
VERFAHREN ZUR STEUERUNG DER AUFNAHME EINER LEISTUNG, DIE DURCH EIN HILFSTRIEBWERK EINES LUFTFAHRZEUGS ERZEUGT WIRD, UND MIT DIESER VORRICHTUNG ZUR STEUERUNG DER LEISTUNGSAUFNAHME AUSGESTATTETES LUFTFAHRZEUG
METHOD FOR MANAGING THE DRAWING OF POWER GENERATED BY AN AUXILIARY POWER UNIT OF AN AIRCRAFT AND AIRCRAFT PROVIDED WITH SAID DEVICE FOR MANAGING DRAWING OF POWER

(30) Priorité: 04.08.2020 FR 2008258
(43) Date de publication de la demande: 09.02.2022
(73) Titulaire: Airbus Operations SAS, 31060 Toulouse (FR); Airbus SAS, 31700 Blagnac (FR); Airbus Operations S.L., 28906 Getafe Madrid (ES)
(72) Inventeur: POIRIER, Didier, 31707 BLAGNAC (FR); FOCH, Etienne, 31060 TOULOUSE (FR); ALIX, Guillaume, 31060 TOULOUSE (FR); CHAUVET, Nicolas, 31060 TOULOUSE (FR); ROUX, Paul-Emile, 31060 TOULOUSE (FR); BOUKAYA, Souhaib, 31060 TOULOUSE (FR); CHIABRANDO, Marcos Javier, 28906 GETAFE (ES)
(74) Mandataire: Fantin, Laurent

(56) Documents cités:
- EP-A1- 3 336 329
- US-A1- 2020 216 180
- US-A1- 2020 239 155

## Description

La présente demande se rapporte à un procédé de gestion du prélèvement d'une puissance produite par un groupe auxiliaire de puissance d'aéronef ainsi qu'à un aéronef équipé dudit dispositif de gestion du prélèvement de puissance.

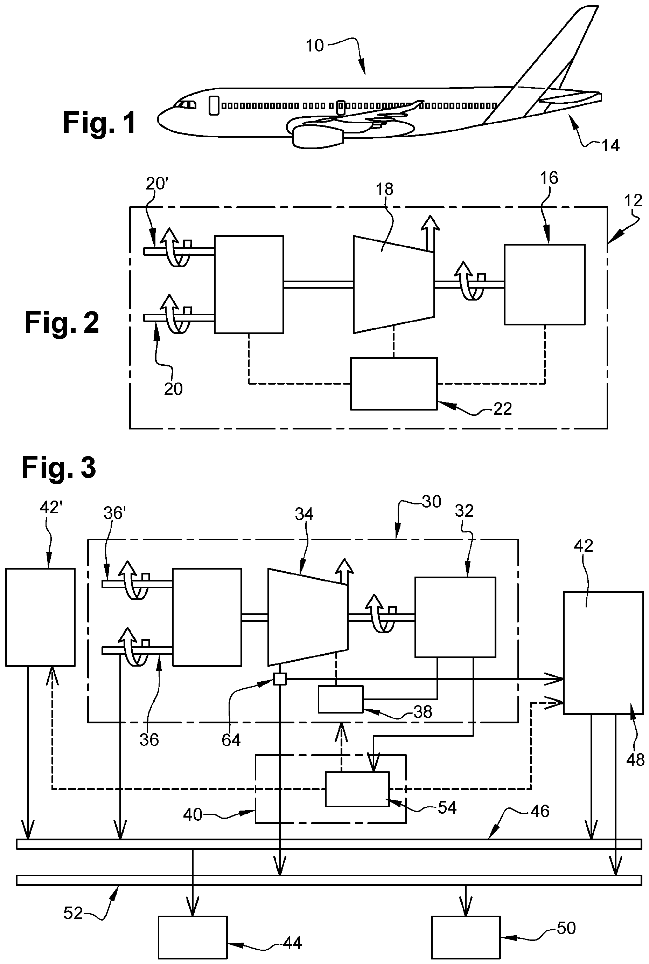

Selon un mode de réalisation illustré sur la figure 1, un aéronef 10 comprend un groupe auxiliaire de puissance 12 (également appelé APU pour Auxiliary Power Unit en anglais) positionné dans le cône de queue 14 de l'aéronef 10. Ce groupe auxiliaire de puissance 12 comprend un turbomoteur 16, un système de prélèvement de puissance pneumatique 18 sous la forme d'un compresseur par exemple, au moins un système de prélèvement mécanique 20, 20' comme un alternateur par exemple, ainsi que différents équipements complémentaires, comme des pompes hydrauliques ou un système de refroidissement par exemple, destinés au bon fonctionnement du groupe auxiliaire de puissance 12.

Lorsque l'aéronef 10 est au sol, le système de prélèvement de puissance pneumatique 18 est utilisé notamment pour alimenter au moins un des moteurs principaux de l'aéronef lors de son démarrage ou le système de conditionnement d'air en cabine. Selon une conception, le groupe auxiliaire de puissance 12 comprend un premier système de prélèvement de puissance mécanique 20 convertissant l'énergie mécanique en énergie électrique et assurant la fonction de source électrique notamment lors des opérations au sol ainsi qu'un deuxième système de prélèvement de puissance mécanique 20' destiné à alimenter en énergie mécanique les équipements complémentaires du groupe auxiliaire de puissance 12.

Lorsque l'aéronef 10 est en vol, le groupe auxiliaire de puissance 12 peut constituer une source de puissance électrique et/ou pneumatique d'appoint en complément des moteurs principaux de l'aéronef ou une source d'énergie de secours en cas de défaillance d'un des moteurs principaux.

Le groupe auxiliaire de puissance 12 comprend une unité de contrôle 22 qui lui est propre, configurée pour gérer la puissance générée par le turbomoteur 16 et l'orienter en fonction des besoins. Cette unité de contrôle 22 comprend une logique de fonctionnement qui gère le prélèvement de la puissance générée par le turbomoteur 16 de la manière suivante lorsque l'aéronef est au sol :
- pendant la phase de démarrage d'au moins un moteur principal, le système de prélèvement pneumatique 18 est prioritaire,
- en dehors de la phase de démarrage d'au moins un moteur principal, les systèmes de prélèvement mécanique 20, 20' sont prioritaires, le restant de la puissance générée étant affecté au système de prélèvement pneumatique 18.

Lorsque l'aéronef 10 est en vol, le groupe auxiliaire de puissance peut fournir une puissance pneumatique et/ou électrique d'appoint, notamment en phase de décollage pour que l'essentiel de la puissance générée par chacun des moteurs principaux soit affecté à la poussée.

L'unité de contrôle 22 et sa logique de fonctionnement étant dédiées au groupe auxiliaire de puissance 12, il est difficile de gérer de manière optimale les systèmes de prélèvement pneumatique et mécanique du groupe auxiliaire de puissance 12 en fonction notamment des autres sources de puissance de l'aéronef, des besoins en énergie des différentes charges de l'aéronef, des circonstances du vol, des phases du vol,...

US 2020/239155 A1 et US 2020/216180 A1 portent sur la gestion de puissance d'un groupe auxiliaire de puissance comprenant au moins un système de prélèvement de puissance pneumatique assurant la fonction de source de puissance de type pneumatique pour l'aéronef ainsi qu'au moins un premier système de prélèvement mécanique assurant la fonction de source de puissance de type électrique pour l'aéronef. EP 3 336 329 A1 porte sur la gestion de puissance d'un groupe auxiliaire de puissance dédié uniquement à la génération d'électricité.

La présente invention vise à remédier à tout ou partie des inconvénients de l'art antérieur.

A cet effet, l'invention a pour objet un procédé de gestion du prélèvement d'une puissance produite par un groupe auxiliaire de puissance d'un aéronef, le groupe auxiliaire de puissance comportant une unité de puissance, au moins un système de prélèvement de puissance pneumatique assurant la fonction de source de puissance de type pneumatique pour l'aéronef ainsi qu'au moins un premier système de prélèvement mécanique assurant la fonction de source de puissance de type électrique pour l'aéronef, l'aéronef comportant au moins une autre source de puissance de type électrique, au moins une charge de type électrique ainsi qu'au moins une charge de type pneumatique, tel que le procédé comprend :
- une étape de calcul d'une capacité maximale de prélèvement de puissance mécanique que le groupe auxiliaire de puissance peut fournir à l'aéronef,
- une étape de détermination d'une puissance mécanique réelle prélevée par le premier système de prélèvement de puissance mécanique,
- une étape de comparaison de la capacité maximale de prélèvement de puissance mécanique et de la puissance mécanique réelle prélevée,
- une étape d'optimisation de la puissance mécanique prélevée qui, à partir de la comparaison de la capacité maximale de prélèvement de puissance mécanique et de la puissance mécanique réelle prélevée, détermine au moins une action correctrice.

Le fait de comparer la capacité maximale de prélèvement de puissance mécanique et la puissance mécanique réelle prélevée permet de pouvoir déterminer si le premier système de prélèvement mécanique du groupe auxiliaire de puissance a une capacité de prélèvement excédentaire et d'adapter le fonctionnement d'au moins une source de puissance de type pneumatique/électrique de l'aéronef et/ou d'au moins une charge de type pneumatique/électrique de l'aéronef en fonction de cette capacité de prélèvement excédentaire. Ainsi, la puissance générée par le groupe auxiliaire de puissance est adaptée à la demande de prélèvement de l'aéronef.

Selon une autre caractéristique, la capacité maximale de prélèvement de puissance mécanique est calculée en fonction d'une capacité maximale de prélèvement de puissance que le groupe auxiliaire de puissance peut fournir à l'aéronef, à laquelle est retranchée une puissance pneumatique réelle prélevée par le système de prélèvement de puissance pneumatique.

Selon une autre caractéristique, si la capacité maximale de prélèvement de puissance mécanique est supérieure à la puissance mécanique réelle prélevée, alors l'action correctrice est une première action visant :
- à allouer un surplus de puissance électrique produite par le premier système de prélèvement de puissance mécanique à au moins une charge de type électrique et/ou à une source de puissance électrique rechargeable, et/ou
- à augmenter le prélèvement de puissance pneumatique réalisé par le (ou les) système(s) de prélèvement pneumatique du groupe auxiliaire de puissance, et/ou
- à réduire la puissance maximale que l'unité de puissance du groupe auxiliaire de puissance peut produire.

Selon une autre caractéristique, si la capacité maximale de prélèvement de puissance mécanique est inférieure à la puissance mécanique réelle prélevée, alors l'action correctrice est une deuxième action visant à réduire la consommation électrique d'au moins une charge de type électrique et/ou à augmenter l'apport en électricité d'une autre source de puissance de type électrique.

Selon une autre caractéristique le procédé comprend une étape de comparaison d'un besoin en puissance pneumatique d'au moins une charge de type pneumatique et de la puissance pneumatique prélevée par le système de prélèvement de puissance pneumatique ainsi qu'une étape d'augmentation de la puissance pneumatique prélevée, en réduisant la puissance mécanique prélevée, si le besoin en puissance pneumatique est supérieur à la puissance pneumatique prélevée par le système de prélèvement de puissance pneumatique et si la capacité maximale de prélèvement de puissance mécanique est supérieure à la puissance mécanique réelle prélevée.

Selon une autre caractéristique le procédé comprend une étape d'augmentation de l'apport en électricité d'une autre source de puissance de type électrique si la capacité maximale de prélèvement de puissance mécanique n'est pas supérieure à la puissance mécanique réelle prélevée afin qu'elle le devienne.

L'invention a également pour objet un aéronef comprenant un groupe auxiliaire de puissance comportant une unité de puissance, au moins un système de prélèvement de puissance pneumatique assurant la fonction de source de puissance de type pneumatique pour l'aéronef ainsi qu'au moins un premier système de prélèvement mécanique assurant la fonction de source de puissance de type électrique pour l'aéronef ; l'aéronef comportant également au moins un système avionique, au moins une autre source de puissance de type électrique, au moins une charge de type électrique, au moins une charge de type pneumatique ains qu'un dispositif de gestion du prélèvement d'une puissance produite par le groupe auxiliaire de puissance permettant de mettre en oeuvre un procédé selon l'une des caractéristiques précédentes; tel que le dispositif comprend une unité de traitement configurée pour calculer une capacité maximale de prélèvement de puissance mécanique que le groupe auxiliaire de puissance peut fournir à l'aéronef et déterminer une puissance mécanique réelle prélevée par le premier système de prélèvement de puissance mécanique ainsi qu'une unité d'optimisation configurée pour comparer la capacité maximale de prélèvement de puissance mécanique et la puissance mécanique réelle prélevée et déterminer au moins une action correctrice en fonction de cette comparaison.

Selon une autre caractéristique, l'unité de traitement et l'unité d'optimisation sont intégrées dans le système avionique et/ou dans une unité de contrôle centralisée configurée pour gérer plusieurs sources de puissance de type pneumatique et/ou mécanique.

D'autres caractéristiques et avantages ressortiront de la description de l'invention qui va suivre, description donnée à titre d'exemple uniquement, en regard des dessins annexés parmi lesquels :
- La figure 1 est une vue latérale d'un aéronef,
- La figure 2 est une représentation schématique d'un groupe auxiliaire de puissance illustrant un mode de réalisation de l'art antérieur,
- La figure 3 est une représentation schématique simplifiée d'un dispositif de gestion du prélèvement de la puissance produite par un groupe auxiliaire de puissance d'aéronef illustrant un mode de réalisation de l'invention,
- La figure 4 est une représentation schématique détaillée d'un dispositif de gestion du prélèvement de la puissance produite par un groupe auxiliaire de puissance d'aéronef illustrant un mode de réalisation de l'invention.

Comme illustré sur la figure 3, un aéronef comprend un groupe auxiliaire de puissance 30 comportant une unité de puissance 32 comme un turbomoteur par exemple, au moins un système de prélèvement de puissance pneumatique 34 sous la forme d'un compresseur de charge par exemple, au moins un système de prélèvement mécanique 36, 36' comme un alternateur par exemple, ainsi qu'au moins un équipement complémentaire, comme une pompe hydraulique ou un système de refroidissement par exemple, destiné au bon fonctionnement du groupe auxiliaire de puissance 30.

Ainsi, le système de prélèvement de puissance pneumatique 34 assure la fonction de source de puissance de type pneumatique pour l'aéronef.

Selon une conception, le groupe auxiliaire de puissance 30 comprend au moins un premier système de prélèvement de puissance mécanique 36 destiné à l'aéronef, convertissant l'énergie mécanique en énergie électrique et assurant la fonction de source de puissance de type électrique pour l'aéronef ainsi qu'au moins un deuxième système de prélèvement de puissance mécanique 36' destiné au groupe auxiliaire de puissance 30, notamment au(x) équipement(s) complémentaire(s) du groupe auxiliaire de puissance 30.

Le groupe auxiliaire de puissance 30 peut comprendre une unité de contrôle APU 38 pour gérer le fonctionnement de l'unité de puissance 32 et du (ou des) système(s) de prélèvement pneumatique 34.

L'aéronef comprend une commande 32.1 pour contrôler l'activation ou la désactivation du groupe auxiliaire de puissance 30.

Tous ces éléments du groupe auxiliaire de puissance 30 ne sont pas plus décrits car ils peuvent être identiques à ceux de l'art antérieur.

L'aéronef comprend également :
- au moins un système avionique 40 assurant entre autres le contrôle de certains équipements électriques, hydrauliques et pneumatiques de l'aéronef;
- au moins un ensemble électrique qui comporte, en plus du premier système de prélèvement mécanique 36 du groupe auxiliaire de puissance 30, au moins une autre source de puissance de type électrique 42, 42', comme chacun des moteurs principaux 42 de l'aéronef ou des batteries 42' par exemple, au moins une charge de type électrique 44, au moins un réseau électrique 46 reliant chaque charge de type électrique 44 à au moins une des sources de puissance de type électrique 36, 42, 42' ;
- au moins un ensemble pneumatique qui comporte, en plus du système de prélèvement de puissance pneumatique 34 du groupe auxiliaire de puissance, au moins une autre source de puissance de type pneumatique 48 comme chacun des moteurs principaux par exemple, au moins une charge de type pneumatique 50 comme un système de conditionnement d'air en cabine par exemple, au moins un réseau pneumatique 52 reliant chaque charge de type pneumatique 50 à au moins une des sources de puissance de type pneumatique 34, 48.

L'aéronef comprend au moins une unité de contrôle centralisée 54 configurée pour gérer plusieurs sources de puissance de type pneumatique, électrique et/ou mécanique 34, 36, 42, 42', 48 en fonction des puissances requises notamment par la poussée de l'aéronef et par la ou les charges de type pneumatique et/ou électrique 44, 50. L'unité de contrôle centralisée 54 peut être intégrée au système avionique 40 de l'aéronef.

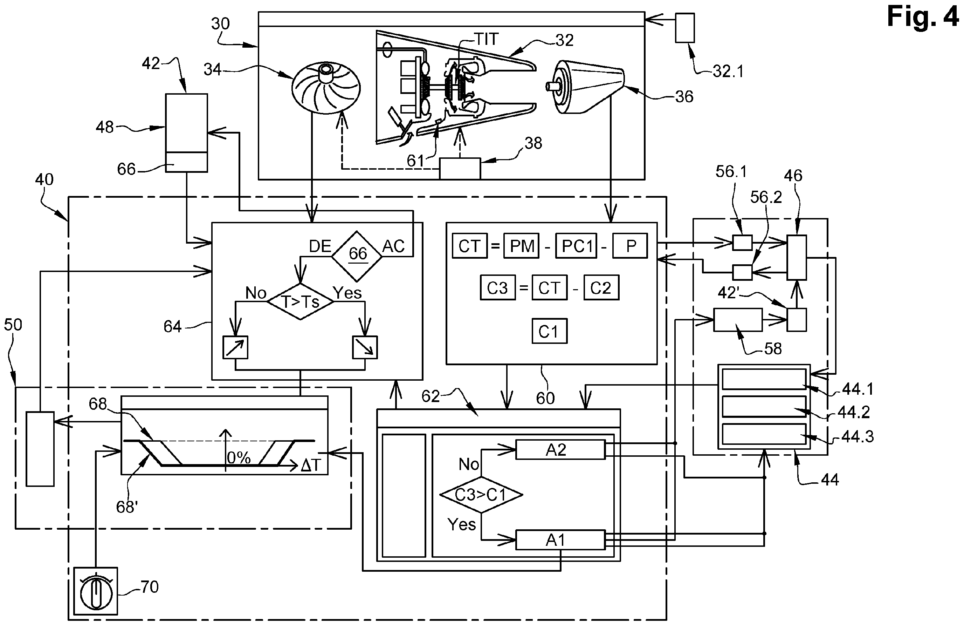

A titre d'exemple, selon un mode de réalisation visible sur la figure 4, l'ensemble électrique comprend plusieurs charges de type électrique 44 comme un moteur de déplacement 44.1 de l'aéronef au sol, des équipements électriques 44.2 de la cabine de l'aéronef ou tout autre charge de type électrique 44.3. Il peut comprendre au moins un équipement d'alimentation électrique 56.1 et au moins un système de régulation 56.2.

Selon un mode de réalisation, les batteries 42' sont rechargeables et l'ensemble électrique comprend un système de management des batteries 58.

Tous ces éléments de l'aéronef ne sont pas plus décrits car ils peuvent être identiques à ceux de l'art antérieur.

Un procédé de gestion du prélèvement de la puissance produite par le groupe auxiliaire de puissance 30 comprend une première étape de détermination d'une puissance maximale PM que l'unité de puissance 32 du groupe auxiliaire de puissance 30 peut produire, une deuxième étape de détermination d'une puissance consommée PC1 par le groupe auxiliaire de puissance 30 lors de son fonctionnement, une troisième étape de détermination des pertes de puissance de conversion P, une étape de calcul d'une capacité maximale de prélèvement de puissance CT que le groupe auxiliaire de puissance 30 peut fournir à l'aéronef et qui correspond à la puissance maximale PM à laquelle sont retranchées la puissance consommée PC1 par le groupe auxiliaire de puissance 30 et les pertes de puissance de conversion P.

Selon un mode opératoire, lorsque l'unité de puissance 32 est un turbomoteur, la puissance maximale PM que l'unité de puissance 32 peut produire est déterminée, à une température maximale TIT du gaz dans le turbomoteur (plus précisément au niveau de l'entrée de la turbine du turbomoteur), à partir d'au moins un modèle de simulation des performances du turbomoteur et d'au moins une condition d'utilisation du turbomoteur comme l'altitude de l'aéronef ou la température de l'air extérieur par exemple. Le (ou les) modèle(s) de simulation des performances du turbomoteur peu(ven)t être affiné(s) en tenant compte d'un coefficient de vieillissement K du turbomoteur. Ces modèles sont généralement élaborés par le fabricant du turbomoteur.

Ce coefficient de vieillissement K peut être périodiquement recalé. A cet effet, la puissance maximale PM est calculée à un point de recalage comme après un nombre déterminé d'heures de fonctionnement, à une puissance élevée donnée par exemple à partir du modèle de simulation des performances du turbomoteur, des conditions d'utilisation du turbomoteur et du coefficient de vieillissement K. En parallèle, la puissance réellement consommée au point de recalage est estimée en fonction de données obtenues à partir des charges de type électrique et pneumatique. Le coefficient de vieillissement K est périodiquement recalé de sorte que la puissance maximale PM au point de recalage calculée en fonction du modèle de simulation des performances du turbomoteur soit sensiblement égale à la puissance réellement consommée en ce même point de recalage.

Les conditions d'utilisation du turbomoteur sont généralement connues par l'unité de contrôle centralisée 54 et/ou par le système avionique 40 de l'aéronef.

La puissance consommée PC1 par le groupe auxiliaire de puissance 30 lors de son fonctionnement peut être déterminée à partir d'au moins une caractéristique de fonctionnement du deuxième système de prélèvement de puissance mécanique 36'. La puissance consommée PC1 par le groupe auxiliaire de puissance 30 lors de son fonctionnement peut être déterminée à partir d'au moins un modèle de simulation de la consommation du groupe auxiliaire de puissance 30.

Les pertes de puissance de conversion P sont connues et dépendent de la conception des éléments constituant le groupe auxiliaire de puissance 30. Ces pertes de puissance de conversion P sont déterminables à partir d'au moins un modèle de simulation des pertes de puissance de conversion P du groupe auxiliaire de puissance 30.

Selon un mode de réalisation, lorsque l'unité de puissance 32 est un turbomoteur, un dispositif de gestion du prélèvement de la puissance produite par le groupe auxiliaire de puissance 30 comprend au moins une unité de traitement 60 qui, à partir d'informations relatives aux conditions d'utilisation du groupe auxiliaire de puissance 30, est configurée pour calculer la capacité maximale de prélèvement de puissance CT que le groupe auxiliaire de puissance 30 peut fournir à l'aéronef. Cette unité de traitement 60 peut être intégrée à l'unité de contrôle centralisée 54 ou au système avionique 40.

Selon une configuration, le procédé de gestion du prélèvement de la puissance produite par le groupe auxiliaire de puissance 30 comprend une étape de détermination de la puissance pneumatique réelle prélevée C2 par le système de prélèvement de puissance pneumatique 34 du groupe auxiliaire de puissance 30 ainsi qu'une étape de calcul d'une capacité maximale de prélèvement de puissance mécanique C3, à une température maximale TIT du gaz dans le turbomoteur (plus précisément au niveau de l'entrée de la turbine du turbomoteur), que le groupe auxiliaire de puissance 30 peut fournir à l'aéronef et qui correspond à la puissance maximale PM de l'unité de puissance 32 à laquelle sont retranchées la puissance consommée PC1 par le groupe auxiliaire de puissance 30, la puissance pneumatique réelle prélevée C2 par le système de prélèvement de puissance pneumatique 34 et les pertes de puissance de conversion P.

Selon un mode opératoire, la puissance pneumatique réelle prélevée C2 par le système de prélèvement de puissance pneumatique 34 est déterminée à partir d'au moins une des caractéristiques du système de prélèvement de puissance pneumatique 34 comme la température d'entrée du compresseur de charge, le débit massique qui traverse le compresseur de charge ou les pressions en amont et en aval du compresseur de charge par exemple.

Selon un mode de réalisation, le dispositif de gestion du prélèvement de la puissance produite par le groupe auxiliaire de puissance 30 comprend au moins un capteur 61 configuré pour mesurer au moins une des caractéristiques du système de prélèvement de puissance pneumatique 34 et émettre un signal en fonction de la caractéristique mesurée. L'unité de traitement 60 est alors configurée pour, à partir de ce signal et d'informations relatives aux conditions d'utilisation du groupe auxiliaire de puissance 30, calculer la capacité maximale de prélèvement de puissance mécanique C3 que le groupe auxiliaire de puissance 30 peut fournir à l'aéronef.

Quel que soit le mode opératoire, le procédé de gestion du prélèvement de la puissance produite par le groupe auxiliaire de puissance 30 comprend une étape de calcul de la capacité maximale de prélèvement de puissance mécanique C3 que le groupe auxiliaire de puissance 30 peut fournir à l'aéronef à partir de données fournies par le système avionique 40 de l'aéronef et/ou l'unité de contrôle centralisée 54 ainsi que par le groupe auxiliaire de puissance 30. En parallèle, le dispositif de gestion du prélèvement de la puissance produite par le groupe auxiliaire de puissance 30 comprend une unité de traitement 60 configurée pour calculer la capacité maximale de prélèvement de puissance mécanique C3 que le groupe auxiliaire de puissance 30 peut fournir à l'aéronef à partir de données fournies par le système avionique 40 de l'aéronef et/ou l'unité de contrôle centralisée 54 ainsi que par le groupe auxiliaire de puissance 30.

Selon une configuration, le procédé de gestion du prélèvement de la puissance produite par le groupe auxiliaire de puissance 30 comprend une étape de détermination d'une puissance mécanique réelle prélevée C1 par le premier système de prélèvement de puissance mécanique 36 du groupe auxiliaire de puissance 30 ainsi qu'une étape de comparaison de la capacité maximale de prélèvement de puissance mécanique C3 et de la puissance mécanique réelle prélevée C1.

Selon un mode opératoire, lorsque le premier système de prélèvement de puissance mécanique 36 se présente sous la forme d'un générateur, la vitesse de rotation de son arbre et la valeur du courant sortant du générateur peuvent être utilisées pour déterminer la valeur de la puissance mécanique réelle prélevée C1.

L'unité de traitement 60 est configurée pour déterminer, à partir de données fournies par le groupe auxiliaire de puissance 30, la puissance mécanique réelle prélevée C1 par le premier système de prélèvement de puissance mécanique 36 du groupe auxiliaire de puissance 30 et la comparer à la capacité maximale de prélèvement de puissance mécanique C3.

Le procédé de gestion du prélèvement de la puissance produite par le groupe auxiliaire de puissance 30 comprend une étape d'optimisation de la puissance mécanique prélevée qui, à partir de la comparaison de la capacité maximale de prélèvement de puissance mécanique C3 et de la puissance mécanique réelle prélevée C1, évalue si la capacité de prélèvement de puissance mécanique est excédentaire ou insuffisante et détermine au moins une action correctrice consistant à adapter le fonctionnement d'au moins une source de puissance de type pneumatique/électrique de l'aéronef et/ou d'au moins une charge de type pneumatique/électrique de l'aéronef en fonction de cette capacité de prélèvement de puissance mécanique excédentaire ou insuffisante.

Selon un mode opératoire, le procédé de gestion du prélèvement de la puissance produite par le groupe auxiliaire de puissance 30 comprend une étape de calcul d'une différence entre la capacité maximale de prélèvement de puissance mécanique C3 et de la puissance mécanique réelle prélevée C1, l'action correctrice étant déterminée en fonction de cette différence lors de l'étape d'optimisation.

Selon un mode de réalisation, si la capacité de prélèvement de puissance mécanique est excédentaire, à savoir si la capacité maximale de prélèvement de puissance mécanique C3 est supérieure à la puissance mécanique réelle prélevée C1, alors l'action correctrice est une première action A1 visant :
- à allouer le surplus de puissance électrique produite par le premier système de prélèvement de puissance mécanique 36 à au moins une charge de type électrique 44, comme au moins un moteur de déplacement 44.1 de l'aéronef au sol par exemple, et/ou à au moins une source de puissance de type électrique rechargeable comme une batterie 42' par exemple, et/ou
- à augmenter le prélèvement de puissance pneumatique réalisé par le (ou les) système(s) de prélèvement pneumatique 34 du groupe auxiliaire de puissance 30 et à allouer ce surplus de puissance pneumatique à une charge de type pneumatique 50 comme le système de conditionnement d'air en cabine, ou
- à réduire la puissance maximale PM que l'unité de puissance 32 du groupe auxiliaire de puissance 30 peut produire afin de limiter la consommation de carburant.

Si la capacité de prélèvement de puissance mécanique est insuffisante, à savoir si la capacité maximale de prélèvement de puissance mécanique C3 est inférieure à la puissance mécanique réelle prélevée C1, alors l'action correctrice est une deuxième action A2 visant à réduire la consommation électrique d'au moins une charge de type électrique et/ou à augmenter l'apport en électricité d'une autre source de puissance de type électrique par exemple en déclenchant l'alimentation électrique d'une source d'appoint comme une batterie 42'.

Quel que soit le mode de réalisation, la capacité maximale de prélèvement de puissance CT ou la capacité maximale de prélèvement de puissance mécanique C3 que le groupe auxiliaire de puissance 30 peut fournir à l'aéronef est connue de l'unité de contrôle centralisée 54 et/ou du système avionique 40 qui peut alors optimiser le fonctionnement de chacune des sources de puissance de type pneumatique/électrique en fonction notamment des besoins des charges de type pneumatique/électrique et/ou optimiser le fonctionnement des charges de type pneumatique/électrique en fonction des capacités des sources de puissance de type pneumatique/électrique.

Selon un mode de réalisation, le dispositif de gestion du prélèvement de la puissance produite par le groupe auxiliaire de puissance 30 comprend une unité d'optimisation 62 configurée pour comparer la capacité maximale de prélèvement de puissance mécanique C3 et la puissance mécanique réelle prélevée C1 ainsi que déterminer au moins une action correctrice en fonction de cette comparaison. Selon un mode de réalisation, l'unité d'optimisation 62 est configurée pour calculer la différence entre la capacité maximale de prélèvement de puissance mécanique C3 et la puissance mécanique réelle prélevée C1 ainsi que déterminer au moins une action correctrice en fonction de cette différence.

L'unité d'optimisation 62 peut être intégrée au système avionique 40 ou à l'unité de contrôle centralisée 54.

Selon un mode de réalisation visible sur la figure 4, l'ensemble pneumatique comprend une unité de régulation 64 configurée pour orienter la puissance pneumatique prélevée par le système de prélèvement de puissance pneumatique 34 en direction d'au moins un moteur principal 42 pour son démarrage et/ou en direction d'au moins une charge de type pneumatique 50 comme un système de conditionnement d'air en cabine.

L'aéronef comprend également au moins une commande de démarrage 66 d'un moteur principal configurée pour occuper un état activé AC lors du démarrage du moteur principal 42 ou un état désactivé DE le reste du temps.

Selon un mode opératoire, le procédé de gestion du prélèvement de la puissance produite par le groupe auxiliaire de puissance 30 comprend une étape de détermination de l'état de la commande de démarrage 66 et une étape d'orientation de la puissance pneumatique prélevée par le système de prélèvement de puissance pneumatique 34 en fonction de l'état de la commande de démarrage 66. Ainsi, si la commande de démarrage 66 est à l'état activé AC, alors la puissance pneumatique est orientée vers le moteur principal 42. Si la commande démarrage 66 est à l'état désactivé DE, alors la puissance pneumatique est orientée vers au moins l'une des charges de type pneumatique 50, notamment en fonction de son besoin en puissance pneumatique.

Selon une configuration, le procédé de gestion du prélèvement de la puissance produite par le groupe auxiliaire de puissance 30 comprend une étape de comparaison d'un besoin en puissance pneumatique d'au moins une charge de type pneumatique 50 et de la puissance pneumatique prélevée par le système de prélèvement de puissance pneumatique 34 ainsi qu'une étape d'augmentation de la puissance pneumatique prélevée, en réduisant la puissance mécanique prélevée, si le besoin en puissance pneumatique est supérieur à la puissance pneumatique prélevée par le système de prélèvement de puissance pneumatique 34 et si la capacité maximale de prélèvement de puissance mécanique C3 est supérieure à la puissance mécanique réelle prélevée C1.

En complément, le procédé de gestion du prélèvement de la puissance produite par le groupe auxiliaire de puissance 30 comprend une étape d'augmentation de l'apport en électricité d'une autre source de puissance électrique, comme de la (ou des) batterie(s) 42', si la capacité maximale de prélèvement de puissance mécanique C3 n'est pas supérieure à la puissance mécanique réelle prélevée C1 afin qu'elle le devienne.

Selon un mode de réalisation, la puissance pneumatique fournie par le système de prélèvement de puissance pneumatique 34 à au moins une charge de type pneumatique 50 comme le système de conditionnement d'air en cabine suit au moins une loi de régulation pneumatique 68, au moins lorsque la commande de démarrage 66 est à l'état désactivé DE. Selon une application, la loi de régulation pneumatique 68 consiste à comparer la température de l'air T en au moins un point de la cabine avec une température de consigne Ts et à réguler un flux de puissance pneumatique transmis au système de conditionnement d'air en cabine en fonction de cette comparaison.

Selon un mode opératoire, la différence DT entre la température de l'air T en au moins un point de la cabine et la température de consigne Ts est calculée.

Si la différence DT est supérieure à une première valeur V1 (ce qui correspond à un déficit de refroidissement) alors le flux de puissance pneumatique transmis au système de conditionnement d'air en cabine est augmenté pour accroître la capacité de refroidissement du système de conditionnement d'air en cabine.

Si la différence DT est inférieure à une deuxième valeur V2 (ce qui correspond à un déficit de chauffage) alors le flux de puissance pneumatique transmis au système de conditionnement d'air en cabine est augmenté pour accroîitre la capacité de réchauffage du système de conditionnement d'air en cabine.

Si la différence DT est comprise entre les première et deuxième valeurs V1, V2 alors le flux de puissance pneumatique transmis au système de conditionnement d'air en cabine est calé sur une valeur minimale.

Selon un mode de réalisation, la puissance pneumatique fournie par le système de prélèvement de puissance pneumatique 34 suit de manière alternée plusieurs lois de régulation pneumatique 68, 68'. Dans ce cas, l'aéronef comprend au moins une commande de sélection 70 permettant de choisir une loi de régulation pneumatique parmi l'ensemble des lois de régulation pneumatique 68, 68' afin d'adapter la loi de régulation pneumatique 68, 68' aux conditions climatiques à l'extérieur de l'aéronef.

En fonctionnement, même si la température extérieure à l'aéronef est élevée (ou très basse) et que le besoin en prélèvement en puissance pneumatique est élevé, il est possible d'ajuster le prélèvement de puissance mécanique en le réduisant afin d'augmenter le prélèvement de la puissance pneumatique afin de toujours répondre au(x) besoin(s) en puissance pneumatique.

## Revendications

1. Procédé de gestion du prélèvement d'une puissance produite par un groupe auxiliaire de puissance (30) d'un aéronef, le groupe auxiliaire de puissance (30) comportant une unité de puissance (32), au moins un système de prélèvement de puissance pneumatique (34) assurant la fonction de source de puissance de type pneumatique pour l'aéronef ainsi qu'au moins un premier système de prélèvement mécanique (36) assurant la fonction de source de puissance de type électrique pour l'aéronef, l'aéronef comportant au moins une autre source de puissance de type électrique (42, 42'), au moins une charge de type électrique (44) ainsi qu'au moins une charge de type pneumatique (50) ; tel que le procédé comprend :
- une étape de calcul d'une capacité maximale de prélèvement de puissance mécanique (C3) que le groupe auxiliaire de puissance (30) peut fournir à l'aéronef,
- une étape de détermination d'une puissance mécanique réelle prélevée (C1) par le premier système de prélèvement de puissance mécanique (36),
- une étape de comparaison de la capacité maximale de prélèvement de puissance mécanique (C3) et de la puissance mécanique réelle prélevée (C1),
- une étape d'optimisation de la puissance mécanique prélevée qui, à partir de la comparaison de la capacité maximale de prélèvement de puissance mécanique (C3) et de la puissance mécanique réelle prélevée (C1), détermine au moins une action correctrice.

2. Procédé selon la revendication 1, **caractérisé en ce que** la capacité maximale de prélèvement de puissance mécanique (C3) est calculée en fonction d'une capacité maximale de prélèvement de puissance (CT) que le groupe auxiliaire de puissance (30) peut fournir à l'aéronef de laquelle est retranchée une puissance pneumatique réelle prélevée (C2) par le système de prélèvement de puissance pneumatique (34).

3. Procédé selon la revendication 1 ou 2, **caractérisé en ce que** si la capacité maximale de prélèvement de puissance mécanique (C3) est supérieure à la puissance mécanique réelle prélevée (C1) alors l'action correctrice est une première action (A1) visant :
- à allouer un surplus de puissance électrique produite par le premier système de prélèvement de puissance mécanique (36) à au moins une charge de type électrique (44) et/ou à une source de puissance électrique rechargeable, et/ou
- à augmenter le prélèvement de puissance pneumatique réalisé par le (ou les) système(s) de prélèvement pneumatique (34) du groupe auxiliaire de puissance (30), ou
- à réduire la puissance maximale (PM) que l'unité de puissance (32) du groupe auxiliaire de puissance (30) peut produire.

4. Procédé selon la revendication 1 ou 2, **caractérisé en ce que** si la capacité maximale de prélèvement de puissance mécanique (C3) est inférieure à la puissance mécanique réelle prélevée (C1) alors l'action correctrice est une deuxième action (A2) visant à réduire la consommation électrique d'au moins une charge de type électrique et/ou augmenter l'apport en électricité d'une autre source de puissance de type électrique.

5. Procédé selon l'une des revendications précédentes, **caractérisé en ce que** le procédé comprend une étape de comparaison d'un besoin en puissance pneumatique d'au moins une charge de type pneumatique (50) et de la puissance pneumatique prélevée par le système de prélèvement de puissance pneumatique (34) ainsi qu'une étape d'augmentation de la puissance pneumatique prélevée, en réduisant la puissance mécanique prélevée, si le besoin en puissance pneumatique est supérieur à la puissance pneumatique prélevée par le système de prélèvement de puissance pneumatique (34) et si la capacité maximale de prélèvement de puissance mécanique (C3) est supérieure à la puissance mécanique réelle prélevée (C1).

6. Procédé selon la revendication précédente, **caractérisé en ce que** le procédé comprend une étape d'augmentation de l'apport en électricité d'une autre source de puissance de type électrique (42') si la capacité maximale de prélèvement de puissance mécanique (C3) n'est pas supérieure à la puissance mécanique réelle prélevée (C1) afin qu'elle le devienne.

7. Procédé selon l'une des revendications précédentes, **caractérisé en ce que** la puissance pneumatique fournie par le système de prélèvement de puissance pneumatique (34) à au moins une charge de type pneumatique (50) suit au moins une loi de régulation pneumatique (68).

8. Aéronef comprenant un groupe auxiliaire de puissance (30) comportant une unité de puissance (32), au moins un système de prélèvement de puissance pneumatique (34) assurant la fonction de source de puissance de type pneumatique pour l'aéronef ainsi qu'au moins un premier système de prélèvement mécanique (36) assurant la fonction de source de puissance de type électrique pour l'aéronef, l'aéronef comportant également au moins un système avionique (40), au moins une autre source de puissance de type électrique (42, 42'), au moins une charge de type électrique (44), au moins une charge de type pneumatique (50) ainsi qu'un dispositif de gestion du prélèvement d'une puissance produite par le groupe auxiliaire de puissance (30) permettant de mettre en oeuvre un procédé selon l'une des revendications précédentes; tel que le dispositif comprend une unité de traitement (60) configurée pour calculer une capacité maximale de prélèvement de puissance mécanique (C3) que le groupe auxiliaire de puissance (30) peut fournir à l'aéronef et déterminer une puissance mécanique réelle prélevée (C1) par le premier système de prélèvement de puissance mécanique (36) ainsi qu'une unité d'optimisation (62) configurée pour comparer la capacité maximale de prélèvement de puissance mécanique (C3) et la puissance mécanique réelle prélevée (C1) et déterminer au moins une action correctrice en fonction de cette comparaison.

9. Aéronef selon la revendication précédente, **caractérisé en ce que** l'unité de traitement (60) et l'unité d'optimisation (62) sont intégrées dans le système avionique (40) et/ou dans une unité de contrôle centralisée (54) configurée pour gérer plusieurs sources de puissance de type pneumatique et/ou mécanique (34, 36, 42, 42', 48).

## Patentansprüche

1. Verfahren zur Steuerung der Entnahme einer Leistung, die von einer Hilfskraftanlage (30) eines Luftfahrzeugs erzeugt wird, wobei die Hilfskraftanlage (30) eine Leistungseinheit (32), wenigstens ein pneumatisches Leistungsentnahmesystem (34), das die Funktion einer Leistungsquelle vom pneumatischen Typ für das Luftfahrzeug übernimmt, sowie wenigstens ein erstes mechanisches Entnahmesystem (36) umfasst, das die Funktion einer Leistungsquelle vom elektrischen Typ für das Luftfahrzeug übernimmt, wobei das Luftfahrzeug wenigstens eine weitere Leistungsquelle vom elektrischen Typ (42, 42'), wenigstens eine Last vom elektrischen Typ (44) sowie wenigstens eine Last vom pneumatischen Typ (50) aufweist; derart, dass das Verfahren umfasst:
- einen Schritt der Berechnung einer maximalen mechanischen Leistungsentnahmekapazität (C3), die die Hilfskraftanlage (30) an das Flugzeug liefern kann,
- einen Schritt des Bestimmens einer tatsächlich entnommenen mechanischen Leistung (C1) durch das erste mechanische Leistungsentnahmesystem (36),
- einen Schritt des Vergleichens der mechanischen Leistungsentnahmekapazität (C3) und der tatsächlich entnommenen mechanischen Leistung (C1),
- einen Schritt zur Optimierung der entnommenen mechanischen Leistung, der anhand des Vergleichs der mechanischen Leistungsentnahmekapazität (C3) mit der tatsächlich entnommenen mechanischen Leistung (C1) wenigstens eine Korrekturmaßnahme festlegt.

2. Verfahren nach Anspruch 1, **dadurch gekennzeichnet, dass** die maximale mechanische Leistungsentnahmekapazität (C3) als Funktion einer maximalen Leistungsentnahmekapazität (CT) berechnet wird, die die Hilfskraftanlage (30) dem Flugzeug zuführen kann, von der eine tatsächlich entnommene pneumatische Leistung (C2) durch das pneumatische Leistungsentnahmesystem (34) abgezogen wird.

3. Verfahren nach Anspruch 1 oder 2, **dadurch gekennzeichnet, dass**, wenn die maximale mechanischen Leistungsentnahmekapazität (C3) größer ist als die tatsächlich entnommene mechanische Leistung (C1), dann die korrigierende Maßnahme eine erste Maßnahme (A1) ist, die darauf abzielt:
- einen Überschuss an elektrischer Leistung, die von dem ersten mechanischen Leistungsentnahmesystem (36) erzeugt wird, wenigstens einer Last vom elektrischen Typ (44) und/oder einer wiederaufladbaren elektrischen Leistungsquelle zuzuweisen, und/oder
- die pneumatische Leistungsentnahme zu erhöhen, die durch das (oder die) pneumatische(n) Entnahmesystem(e) (34) der Hilfskraftanlage (30) erfolgt, oder
- die maximale Leistung (PM) zu reduzieren, die die Leistungseinheit (32) der Hilfskraftanlage (30) erzeugen kann.

4. Verfahren nach Anspruch 1 oder 2, **dadurch gekennzeichnet, dass**, wenn die maximale mechanischen Leistungsentnahmekapazität (C3) geringer ist als die tatsächlich entnommene mechanische Leistung (C1), dann die korrigierende Maßnahme eine zweite Maßnahme (A2) ist, die darauf abzielt, den Stromverbrauch wenigstens einer Last vom elektrischen Typ zu reduzieren und/oder die Stromzufuhr von einer anderen Leistungsquelle vom elektrischen Typ zu erhöhen.

5. Verfahren nach einem der vorhergehenden Ansprüche, **dadurch gekennzeichnet, dass** das Verfahren einen Schritt des Vergleichens eines Bedarfs an pneumatischer Leistung von wenigstens einer Last vom pneumatischen Typ (50) mit der pneumatischen Leistung, die durch das pneumatisches Leistungsentnahmesystem (34) entnommen wird, sowie einen Schritt des Erhöhens der entnommenen pneumatischen Leistung durch Verringern der entnommenen mechanischen Leistung umfasst, wenn der Bedarf an pneumatischer Leistung größer ist als die von dem pneumatisches Leistungsentnahmesystem (34) entnommene pneumatische Leistung und wenn die maximale mechanischen Leistungsentnahmekapazität (C3) größer ist als die tatsächlich entnommene mechanische Leistung (C1).

6. Verfahren nach dem vorhergehenden Anspruch, **dadurch gekennzeichnet, dass** das Verfahren einen Schritt umfasst, bei dem die Zufuhr von Elektrizität aus einer anderen Leistungsquelle elektrischer Art (42') erhöht wird, wenn die maximale mechanischen Leistungsentnahmekapazität (C3) nicht größer ist als die tatsächlich entnommene mechanische Leistung (C1), damit sie größer wird.

7. Verfahren nach einem der vorhergehenden Ansprüche, **dadurch gekennzeichnet, dass** die pneumatische Leistung, die von dem pneumatischen Leistungsentnahmesystem (34) an wenigstens eine Last vom pneumatischen Typ (50) geliefert wird, wenigstens einem pneumatischen Regelgesetz (68) folgt.

8. Luftfahrzeug mit einer Hilfskraftanlage (30), die eine Leistungseinheit (32), wenigstens ein pneumatisches Leistungsentnahmesystem (34), das die Funktion einer Leistungsquelle vom pneumatischen Typ für das Luftfahrzeug übernimmt, sowie wenigstens ein erstes mechanisches Entnahmesystem (36) umfasst, das die Funktion einer Leistungsquelle vom elektrischen Typ für das Luftfahrzeug übernimmt, wobei das Luftfahrzeug auch wenigstens ein Avioniksystem (40), wenigstens eine weitere Leistungsquelle vom elektrischen Typ (42, 42'), wenigstens eine Last vom elektrischen Typ (44), wenigstens eine Last vom pneumatischen Typ (50) sowie eine Vorrichtung zur Steuerung der Entnahme einer von der Hilfskraftanlage (30) erzeugten Leistung umfasst, die es ermöglicht, ein Verfahren nach einem der vorhergehenden Ansprüche durchzuführen; derart, dass die Vorrichtung eine Verarbeitungseinheit (60) umfasst, die dazu eingerichtet ist, eine maximale mechanische Leistungsentnahmekapazität (C3) zu berechnen, die die Hilfskraftanlage (30) dem Flugzeug zuführen kann, und eine tatsächliche mechanische Leistung zu bestimmen, die durch das erste mechanische Leistungsentnahmesystem (36) entnommen wird (C1), sowie eine Optimierungseinheit (62), die dazu eingerichtet ist, die maximale mechanische Leistungsentnahmekapazität (C3) mit der tatsächlichen entnommenen mechanischen Leistung (C1) zu vergleichen und wenigstens eine korrigierende Maßnahme in Abhängigkeit von diesem Vergleich zu bestimmen.

9. Flugzeug nach dem vorhergehenden Anspruch, **dadurch gekennzeichnet, dass** die Verarbeitungseinheit (60) und die Optimierungseinheit (62) in das Avioniksystem (40) und/oder in eine zentrale Steuereinheit (54) integriert sind, die so eingerichtet ist, dass sie mehrere Leistungsquellen pneumatischer und/oder mechanischer Art (34, 36, 42, 42', 48) verwaltet.

## Claims

1. Method for managing the offtake of power produced by an auxiliary power unit (30) of an aircraft, the auxiliary power unit (30) comprising a power unit (32), at least one pneumatic power offtake system (34) acting as a pneumatic-type power source for the aircraft and at least a first mechanical offtake system (36) acting as an electrical-type power source for the aircraft, the aircraft comprising at least one other electrical-type power source (42, 42'), at least one electrical-type load (44) and at least one pneumatic-type load (50); such that the method comprises:
- a step of calculating a maximum capacity for offtake of mechanical power (C3) that the auxiliary power unit (30) can provide to the aircraft,
- a step of determining an actual offtake of mechanical power (C1) taken off by the first mechanical power offtake system (36),
- a step of comparing the maximum capacity for offtake of mechanical power (C3) and the actual offtake of mechanical power (C1),
- a step of optimizing the offtake of mechanical power which step, on the basis of the comparison between the maximum capacity for offtake of mechanical power (C3) and the actual offtake of mechanical power (C1), determines at least one corrective action.

2. Method according to Claim 1, **characterized in that** the maximum capacity for offtake of mechanical power (C3) is calculated on the basis of a maximum capacity for offtake of power (CT) that the auxiliary power unit (30) can provide to the aircraft, from which there is subtracted an actual offtake of pneumatic power (C2) taken off by the pneumatic power offtake system (34).

3. Method according to Claim 1 or 2, **characterized in that** if the maximum capacity for offtake of mechanical power (C3) is greater than the actual offtake of mechanical power (C1), then the corrective action is a first action (A1) aimed:
- at allocating a surplus of electrical power produced by the first mechanical power offtake system (36) to at least one electrical-type load (44) and/or to a rechargeable electrical power source, and/or
- at increasing the offtake of pneumatic power performed by the pneumatic offtake system or systems (34) of the auxiliary power unit (30), or
- at reducing the maximum power (PM) that the power unit (32) of the auxiliary power unit (30) can produce.

4. Method according to Claim 1 or 2, **characterized in that** if the maximum capacity for offtake of mechanical power (C3) is less than the actual offtake of mechanical power (C1) then the corrective action is a second action (A2) aimed at reducing the electrical consumption of at least one electrical-type load and/or at increasing the electricity supply of another electrical-type power source.

5. Method according to one of the preceding claims, **characterized in that** the method comprises a step of comparing a pneumatic power requirement of at least one pneumatic-type load (50) with the offtake pneumatic power taken off by the pneumatic power offtake system (34) and a step of increasing the offtake of pneumatic power by reducing the offtake of mechanical power if the pneumatic power requirement is greater than the offtake of pneumatic power taken off by the pneumatic power offtake system (34) and if the maximum capacity for offtake of mechanical power (C3) is greater than the actual offtake of mechanical power (C1).

6. Method according to the preceding claim, **characterized in that** the method comprises a step of increasing the electricity supply of another electrical-type power source (42') if the maximum capacity for offtake of mechanical power (C3) is not greater than the actual offtake of mechanical power (C1) so that it does become so.

7. Method according to one of the preceding claims, **characterized in that** the pneumatic power provided by the pneumatic power offtake system (34) to at least one pneumatic-type load (50) follows at least one pneumatic control law (68).

8. Aircraft comprising an auxiliary power unit (30) comprising a power unit (32), at least one pneumatic power offtake system (34) acting as a pneumatic-type power source for the aircraft and at least a first mechanical offtake system (36) acting as an electrical-type power source for the aircraft, the aircraft also comprising at least one avionic system (40), at least one other electrical-type power source (42, 42'), at least one electrical-type load (44), at least one pneumatic-type load (50) and a device for managing the offtake of power produced by the auxiliary power unit (30) allowing implementation of the method according to one of the preceding claims, such that the device comprises a processing unit (60) configured to calculate a maximum capacity for offtake of mechanical power (C3) that the auxiliary power unit (30) can provide to the aircraft, and determine an actual offtake of mechanical power (C1) taken off by the first mechanical power offtake system (36), and an optimization unit (62) configured to compare the maximum capacity for offtake of mechanical power (C3) and the actual offtake of mechanical power (C1), and determine at least one corrective action on the basis of this comparison.

9. Aircraft according to the preceding claim, **characterized in that** the processing unit (60) and the optimization unit (62) are integrated into the avionic system (40) and/or into a centralised control unit (54) configured to manage several pneumatic-type and/or mechanical-type power sources (34, 36, 42, 42', 48).
